# FASCICULE DE BREVET EUROPEEN

(11) **EP 1 119 088 B1**
(45) Date de publication et mention de la délivrance du brevet: **26.08.2009**
(21) Numéro de dépôt: 01400165.5
(22) Date de dépôt: 19.01.2001
(51) Int. Cl.: H02G 3/12

(54) **Conduit de câblage électrique à multicompartiments présentant une grande capacité de câblage**
Elektrische Mehrfachkammerkabelführung mit hohem Verdrahtungsvermögen
High capacity multichannel ducting for electrical cabling

(30) Priorité: 21.01.2000 FR 0000779
(43) Date de publication de la demande: 25.07.2001
(73) Titulaire: PLANET WATTOHM, 60300 Senlis (FR)
(72) Inventeur: Bacouelle, Hervé, 60300 Senlis (FR); Dowd, David, North Syracuse, NY 13212 (US)
(74) Mandataire: Santarelli

(56) Documents cités:
- BE-A- 831 628
- DE-A- 3 708 357
- DE-A- 19 516 277
- FR-A- 1 477 081
- FR-A- 2 660 120

## Description

La présente invention concerne de manière générale les conduits de câblage électriques à multicompartiments de cheminement de câbles.

Elle concerne plus particulièrement un conduit de câblage électrique comprenant au moins un premier et un deuxième compartiments de cheminement de câbles s'étendant en parallèle selon la direction générale longitudinale dudit conduit, et séparés l'un de l'autre par une cloison d'isolation fixe qui comprend au moins une ouverture de communication entre les premier et deuxième compartiments.

Généralement, dans un des compartiments d'un conduit de câblage à multicompartiments, circulent les câbles d'alimentation en courant "fort", c'est-à-dire les câbles d'alimentation en courant provenant du secteur, et dans un autre compartiment circulent les câbles d'alimentation en courant "faible", c'est-à-dire les câbles de téléphone ou de réseau informatique.

De manière usuelle, les appareillages électriques, en particulier les prises de courant "faible" ou "fort", à raccorder aux câbles circulant dans les différents compartiments d'un conduit de câblage, sont montés respectivement dans les compartiments où circulent les câbles auxquels ils sont raccordés.

Toutefois, un tel agencement diminue la capacité de câblage du conduit.

Pour augmenter la capacité de câblage d'un tel conduit de câblage à multicompartiments, il existe plusieurs solutions déjà connues.

Une première solution consiste à augmenter la dimension d'un des compartiments.

Une deuxième solution consiste à utiliser un support d'appareillage électrique externe au conduit de câblage.

Aucune de ces solutions n'est a priori satisfaisante car elles augmentent, au moins localement, l'encombrement externe du conduit de câblage muni de ses appareillages électriques.

Par ailleurs, les documents FR 2 660 120 et FR 2 719 887 proposent une autre solution au problème de capacité de câblage d'un conduit de câblage, qui consiste à prévoir, entre deux compartiments de cheminement de câbles, un troisième compartiment destiné à recevoir l'ensemble des appareillages électriques destinés à être raccordés aux câbles circulant dans les deux compartiments précités, ce troisième compartiment étant séparé des autres compartiments par des cloisons d'isolation pourvues d'ouvertures de communication entre les compartiments respectifs de façon à permettre le passage d'un câble circulant dans un des deux compartiments de cheminement de câbles, au troisième compartiment pour être raccordé à un appareillage électrique.

Outre le fait que cette solution augmente également la largeur ou hauteur du conduit de câblage, elle ne permet pas d'assurer une bonne isolation électrique entre des câbles d'alimentation en courant "faible" et courant "fort", car ces câbles doivent cohabiter dans le troisième compartiment central, sans séparation particulière, pour être raccordés à des appareillages électriques juxtaposés dans ledit compartiment.

Afin de remédier à l'inconvénient précité, l'invention propose une nouvelle solution au problème de capacité de câblage d'un conduit de câblage électrique à multicompartiments, sans en augmenter l'encombrement externe et en assurant une parfaite isolation électrique entre les câbles courant "fort" et les câbles courant "faible", de façon à répondre aux exigences des normes en vigueur dans ce domaine.

Plus particulièrement, l'invention propose un conduit de câblage électrique du type défini en introduction, caractérisé en ce qu'il comprend une boîte d'isolation électrique comportant une paroi latérale pourvue d'une ouverture d'accès latéral, ladite boîte d'isolation électrique étant montée dans le premier compartiment de manière à ce que son ouverture d'accès latéral coïncide avec l'ouverture de communication de la cloison d'isolation, l'espace défini à l'intérieur de ladite boîte formant une extension du deuxième compartiment dans le premier, qui est isolée électriquement du premier compartiment et destinée à accueillir un appareillage électrique à raccorder à des câbles électriques circulant dans le deuxième compartiment.

Ainsi, selon l'invention, il est possible de positionner avantageusement l'ensemble des appareillages électriques du conduit de câblage électrique dans un de ses compartiments de cheminement de câbles, afin d'en libérer les autres et d'augmenter ainsi leur capacité de câblage.

Dans la pratique, c'est le plus souvent le compartiment de cheminement de câbles d'alimentation en courant "faible" qui sera libéré de ses appareillages électriques, positionnés dans le compartiment de cheminement de câbles d'alimentation en courant "fort", parce que c'est celui-ci dont la capacité de câblage doit être augmentée pour permettre la desserte d'un plus grand nombre de postes informatiques ou téléphoniques.

D'autres caractéristiques non limitatives et avantageuses du conduit de câblage électrique selon l'invention sont les suivantes :
- chaque ouverture de communication peut être réalisée à la demande par découpage de la cloison d'isolation ;
- chaque ouverture de communication peut venir de formation avec ladite cloison d'isolation. Dans ce cas, il peut être avantageux de combler chaque ouverture de communication avec une portion de cloison amovible afin d'utiliser le conduit de câblage comme un conduit de câblage usuel, et de libérer, à la demande, chaque communication pour augmenter la capacité d'un des compartiments dudit conduit ;
- la boîte d'isolation électrique comporte, outre son ouverture d'accès latéral, une ouverture d'accès frontal recevant une platine support d'un appareillage électrique ;
- la boîte d'isolation électrique comporte, sur sa paroi latérale pourvue de l'ouverture d'accès latéral, des moyens de clipsage sur ladite cloison d'isolation ;
- la platine support d'appareillage électrique est clipsée sur le conduit de câblage de manière à maintenir en position la boîte d'isolation électrique dans le compartiment correspondant dudit conduit ;
- la boîte d'isolation électrique peut comporter sur la face externe de sa paroi de fond des moyens de clipsage sur un rail longitudinal prévu dans le fond du compartiment correspondant du conduit de câblage ;
- l'ouverture d'accès latéral de la boîte d'isolation électrique peut être définie à l'intérieur d'un cadre en saillie de la paroi latérale correspondante de ladite boîte d'isolation électrique ;
- ledit cadre comporte avantageusement deux montants latéraux parallèles formant des retours en équerre de ladite paroi latérale de la boîte d'isolation, et portant sur leur face externe des moyens de positionnement dudit cadre dans l'ouverture de communication de ladite cloison d'isolation, de sorte que ladite ouverture d'accès latéral de la boîte d'isolation électrique coïncide avec ladite ouverture de communication ;
- ledit cadre comporte également avantageusement une poutre longitudinale délimitant à la fois un côté de l'ouverture d'accès latéral et un côté de l'ouverture d'accès frontal, ladite poutre portant à ses extrémités un doigt de positionnement du cadre dans l'ouverture de communication destiné à s'engager dans une gouttière appropriée de la cloison d'isolation de sorte que la poutre se substitue localement à une partie haute de la cloison d'isolation ;
- cette poutre peut venir de formation avec la boîte d'isolation électrique, ou peut être rapportée sur la boîte d'isolation électrique pour faciliter le raccordement des câbles électriques circulant dans le deuxième compartiment à l'appareillage électrique monté dans ladite boîte d'isolation électrique et éviter ainsi le "tricotage" desdits câbles.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue partielle en perspective éclatée d'un conduit de câblage électrique selon l'invention ;
- la figure 2 est une vue partielle en perspective de dessus du conduit de câblage selon l'invention ;
- la figure 3 est une vue en bout du conduit de câblage représenté sur la figure 2, dont un des deux compartiments est muni d'un couvercle ;
- la figure 4 est une vue en coupe selon le plan A-A du conduit de câblage représenté sur la figure 2, avec le compartiment ne comportant pas les appareillages électriques muni d'un couvercle de fermeture ;
- les figures 5a et 5b sont des vues en perspective de côté et de dessous de la boîte d'isolation électrique du conduit de câblage selon l'invention ;
- les figures 6a et 6b sont des vues de dessus et de dessous de la platine support d'appareillage électrique du conduit de câblage selon l'invention ; et
- la figure 7 est une vue partielle de dessus de la boîte d'isolation électrique mise en place dans un compartiment du conduit de câblage selon l'invention, avec un arrachement partiel au niveau de la jonction du cadre délimitant l'ouverture d'accès latéral de ladite boîte d'isolation électrique, avec la cloison d'isolation du conduit de câblage.

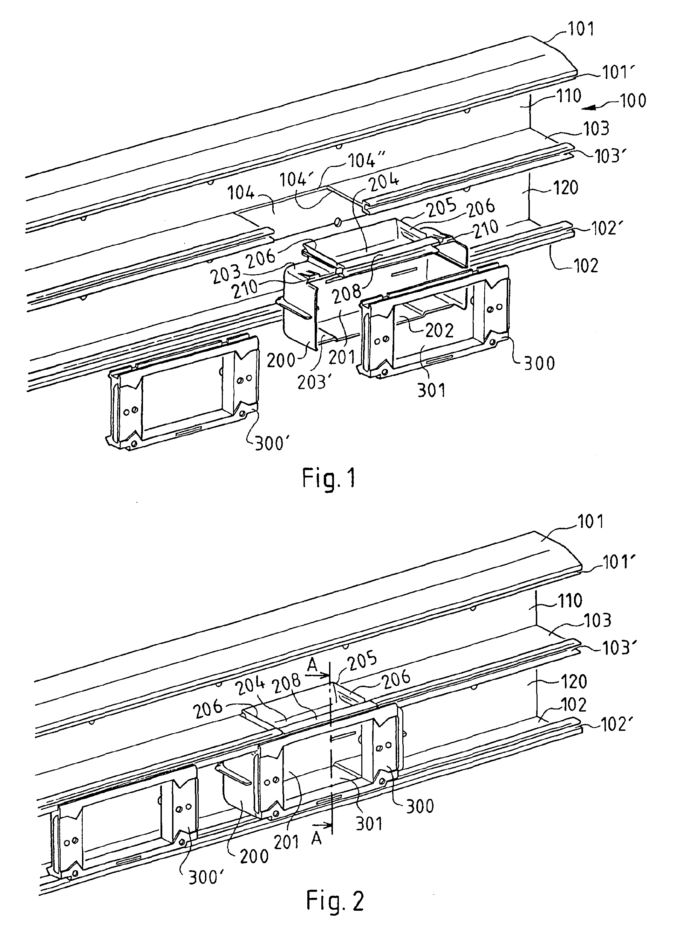

Sur les figures 1 à 4, on a représenté un conduit de câblage électrique 100 à multicompartiments, qui est un profilé réalisé préférentiellement par extrusion d'une matière plastique, et qui comprend ici un premier et un deuxième compartiments 120, 110 de cheminement de câbles s'étendant en parallèle selon la direction générale longitudinale dudit conduit.

Le premier compartiment 120 est un compartiment de cheminement de câbles d'alimentation en courant "fort", c'est-à-dire le courant provenant du secteur à partir duquel est tirée une tension électrique de 110 ou de 230 volts.

Le deuxième compartiment 110 est un compartiment de cheminement de câbles d'alimentation en courant "faible", c'est-à-dire des câbles de réseau téléphonique ou de réseau informatique.

Les premier et deuxième compartiments de cheminement de câbles 120, 110 sont séparés l'un de l'autre par une cloison d'isolation 103 fixe.

Ici, de façon préférentielle, cette cloison d'isolation 103 fait partie intégrante du conduit de câblage 100, c'est-à-dire qu'elle vient de formation par extrusion avec celui-ci.

Bien entendu, on pourrait prévoir dans une variante de réalisation non représentée, que la cloison d'isolation 103 soit rapportée et fixée de manière définitive sur le conduit de câblage. Cela peut être le cas d'un conduit de câblage réalisé en matière métallique, telle que l'aluminium, avec une cloison d'isolation rapportée en matière plastique.

Cette cloison d'isolation 103 comprend supérieurement une gouttière longitudinale 103' de section transversale en U délimitée par deux cloisons longitudinales parallèles 103", et dans laquelle vient se fixer par clipsage soit un couvercle de fermeture 150 d'un compartiment 110, soit une platine support 300, 300' d'appareillage électrique, comme cela sera décrit plus en détail ultérieurement.

Le compartiment de cheminement de câbles 110 est délimité entre une paroi de fond, une paroi latérale externe 101 du conduit de cheminement de câbles 100 et la cloison d'isolation 103, et le compartiment de cheminement de câbles 120 est délimité entre une paroi de fond, la cloison d'isolation 103 et l'autre paroi latérale externe 102 du conduit de cheminement de câbles 100.

Chaque compartiment 110, 120 comporte une section en U, les parois latérales externe 101, 102 du conduit de câblage 100 comportant ici des retours 101', 102' s'étendant transversalement à la direction longitudinale du conduit vers l'intérieur de celui-ci, et formant chacun une gouttière longitudinale dans laquelle peut être montés des moyens de clipsage d'un couvercle de fermeture 150 ou d'une platine support 300 d'appareillage électrique.

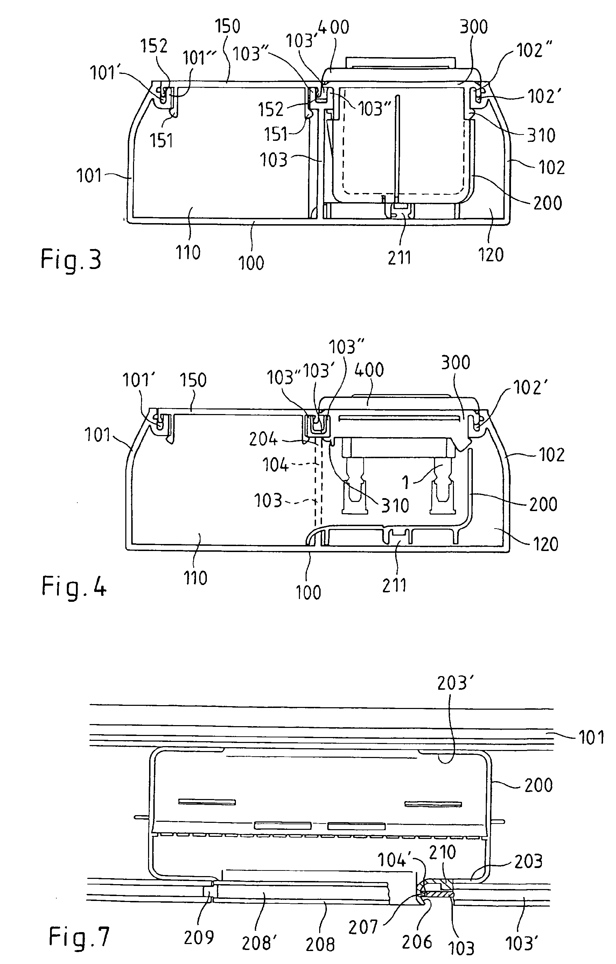

En particulier, comme le montre plus particulièrement la figure 3, le couvercle de fermeture 150 d'un compartiment 110 du conduit de câblage 100, comporte, au niveau de ses bords longitudinaux parallèles, des pattes de clipsage 151, 152 qui, par déformation élastique, viennent prendre en sandwich, d'une part, une cloison longitudinale 103" de la gouttière 103' de la cloison d'isolation 103 et, d'autre part, la paroi interne 101" de la gouttière 101' de la paroi latérale externe 101 du compartiment 110 correspondant du conduit de câblage 100.

En outre, comme le montre la figure 3, chaque platine support 300, 300' d'appareillage électrique montée dans l'autre compartiment 120 du conduit de câblage 100, comporte également sur ses bords longitudinaux des bourrelets et dents de clipsage 310 qui, par déformation élastique, viennent, d'une part, se coincer sous la gouttière 103' de la cloison d'isolation 103 et, d'autre part, prendre en sandwich la paroi interne 102" de la gouttière 102' de la paroi latérale externe 102 du compartiment 120 correspondant du conduit de câblage 100.

A ce sujet, la gouttière 103' de la cloison d'isolation 103 déborde de part et d'autre de ladite paroi pour former des rebords extérieurs en dessous desquels viennent s'accrocher les pattes de clipsage d'un couvercle de fermeture 150 ou les bourrelets et dents de clipsage d'une platine support 300 d'appareillage électrique.

Par ailleurs, avantageusement, la cloison d'isolation 103 comprend ici une ouverture de communication 104 entre les premier et deuxième compartiments 120,110.

Bien entendu, cette cloison d'isolation 103 peut comporter plusieurs ouvertures de communication du même type.

Chaque ouverture de communication 104 peut être réalisée à la demande par découpage, avec un outil de coupe approprié, de ladite cloison d'isolation 103.

Elle peut être également formée dans ladite cloison d'isolation lors de sa fabrication.

Dans ce cas, il peut être prévu avantageusement des portions de cloison d'isolation amovibles qui comblent temporairement lesdites ouvertures de communication pour permettre une utilisation dite "standard" du conduit de câblage à multicompartiments, chaque portion de cloison d'isolation amovible étant retirée à la demande pour libérer l'ouverture de communication 104 correspondante lorsqu'il s'avère nécessaire d'augmenter la capacité de câblage d'un des compartiments dudit conduit de câblage.

Associée à l'ouverture de communication 104, il est prévu une boîte d'isolation électrique 200 comportant une paroi latérale 203 pourvue d'une ouverture d'accès latéral 204.

Cette boîte d'isolation électrique 200, comme le montrent plus particulièrement les figures 1 à 4, est montée ici dans le premier compartiment 120 de manière à ce que son ouverture d'accès latéral 204 coïncide avec ladite ouverture de communication 104, l'espace défini à l'intérieur de la boîte 200 formant une extension du deuxième compartiment 110 dans le premier 120, qui est isolée électriquement du premier compartiment 120 et destinée à accueillir un appareillage électrique 1 à raccorder à des câbles électriques circulant dans le deuxième compartiment 110.

On peut, en déportant ainsi dans le premier compartiment 120 les appareillages électriques destinés à être raccordés aux câbles électriques circulant dans le deuxième compartiment 110, augmenter la capacité de câblage du deuxième compartiment 110, puisque la place prise normalement par les appareillages électriques dans ce dernier compartiment est libérée et prise dans le premier compartiment 120.

Avantageusement, comme le montre plus particulièrement la figure 2, le premier compartiment 120 reçoit une platine support 300' d'appareillage électrique destiné à être raccordé à des câbles d'alimentation en courant "fort" circulant dans ce compartiment, et une platine support 300 d'appareillage électrique destiné à être raccordé à des câbles d'alimentation en courant "faible" circulant dans le deuxième compartiment 110, cette dernière platine support 300 venant alors fermer la boîte d'isolation électrique 200 correspondante contenant ledit appareillage électrique.

Chaque platine support 300, 300' portant l'appareillage électrique est recouverte d'une plaque de façade 400 de décoration et de protection.

Les câbles d'alimentation en courant "fort" cheminant dans le premier compartiment 120 circulent dans l'espace restant entre la boîte d'isolation électrique 200 et la paroi latérale externe 102 du conduit de câblage.

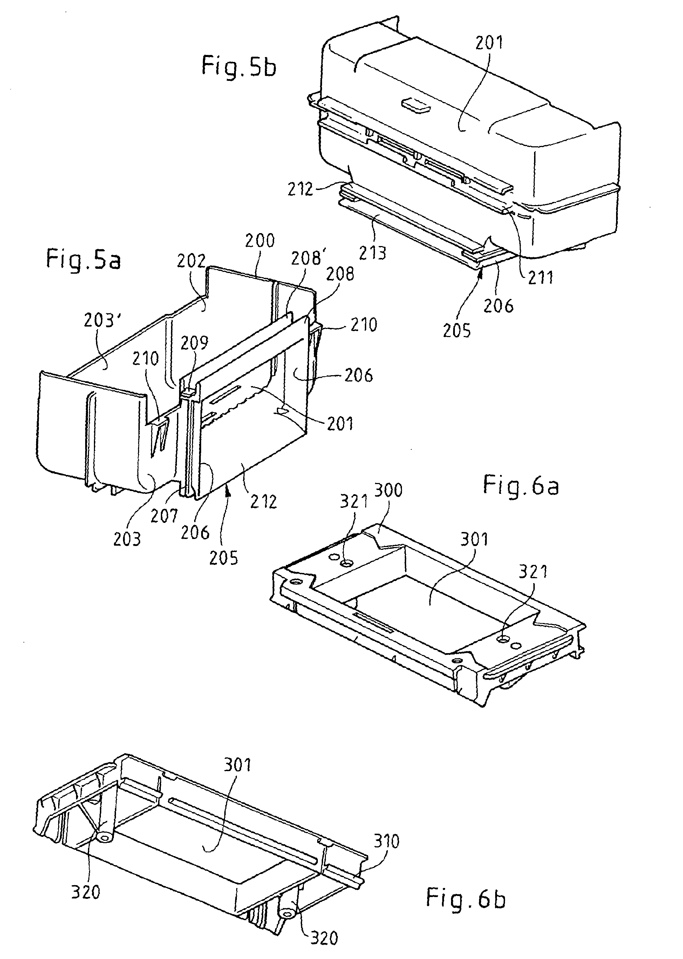

Plus particulièrement, comme le montrent les figures 5a, 5b, 6b, 6a, la boîte d'isolation électrique 200 comporte, outre son ouverture d'accès latéral 204, une ouverture d'accès frontal 202 recevant la platine support 300 d'un appareillage électrique 1 (voir figure 4). Cette platine support 300 comprend à cet effet des puits 321 formés dans des colonnettes 320 pour le vissage de vis de fixation dudit appareillage électrique sur ladite platine.

Comme cela a déjà été décrit précédemment, cette platine support d'appareillage électrique 300 est clipsée sur le conduit de câblage de manière à maintenir en position la boîte d'isolation électrique 200 dans le compartiment correspondant 120 dudit conduit 100. En particulier, la platine support 300 bloque en hauteur la boîte d'isolation électrique 200 placée dans le compartiment 120.

La platine support 300 comprend une ouverture 301 recevant l'appareillage électrique 1, cette ouverture 301 venant coïncider avec l'ouverture d'accès frontal 202 de la boîte d'isolation électrique 200, lors du clipsage de ladite platine sur le conduit.

En outre, la boîte d'isolation électrique 200 comporte, sur sa paroi latérale 203 pourvue de l'ouverture d'accès latéral 204, des moyens de clipsage 210 de ladite boîte sur ladite cloison d'isolation.

Plus particulièrement, ces moyens de clipsage 210 comportent deux languettes déformables élastiquement positionnées de part et d'autre de l'ouverture d'accès latéral 204 et supportées par des nervures de rigidification s'étendant sur ladite paroi latérale 203, ces languettes déformables 210 venant se positionner par déformation élastique sous un rebord extérieur formé par la gouttière longitudinale 103' de la cloison d'isolation 103 (voir figure 7) en laissant un certain jeu en hauteur pour permettre la mise en place des moyens de clipsage de la platine support 300 sous la gouttière 103'.

De plus, comme le montrent plus particulièrement les figures 5a et 5b, la boîte d'isolation électrique 200 est pourvue sur la face externe de sa paroi de fond 201 de moyens de clipsage 211 sur un rail longitudinal prévu dans le fond du compartiment correspondant du conduit de câblage, ce rail ayant par exemple une section globalement en T.

Ici, selon le mode de réalisation représenté, le compartiment de cheminement de câbles correspondant 120 ne comporte pas un tel rail longitudinal.

Les moyens de clipsage 211 comprennent une rainure définie entre des parois en regard portant des dents et des butées de clipsage.

Par ailleurs, l'ouverture d'accès latéral 204 de la boîte d'isolation électrique 200 est définie à l'intérieur d'un cadre 205 faisant saillie de la paroi latérale correspondante 203 de ladite boîte d'isolation électrique 200.

Ce cadre 205 comporte deux montants latéraux parallèles 206 formant des retours en équerre de ladite paroi latérale 204 de la boîte d'isolation 200, et portant sur leur face externe des moyens de positionnement du cadre dans l'ouverture de communication 104 de la cloison d'isolation 103, de sorte que ladite ouverture d'accès latéral 204 de la boîte d'isolation 200 coïncide avec ladite ouverture de communication, c'est-à-dire qu'elle se substitue partiellement à ladite ouverture de communication, cette dernière étant plus large que l'ouverture d'accès latéral 204 pour recevoir le cadre 205 en question.

Comme le montre plus particulièrement la figure 7, ces moyens de positionnement comprennent une nervure longitudinale 207, s'étendant au milieu et sur la longueur de chaque montant latéral 206 et venant se positionner contre la tranche correspondante 104' de l'ouverture de communication 104 de la cloison d'isolation 103.

Ces nervures 207 assurent également une continuité d'isolation électrique entre les deux compartiments au niveau de l'ouverture de communication 104.

En outre, le cadre 205 comporte une poutre longitudinale 208 délimitant à la fois un côté de l'ouverture d'accès latéral 204 et un côté de l'ouverture d'accès frontal 202.

La poutre 208 présente une largeur égale à celle de la gouttière 103' de la cloison d'isolation 103, et comporte, sur la face opposée à celle tournée vers l'ouverture 204 de la boîte d'isolation électrique, une gouttière 208' identique à la gouttière 103' de la cloison d'isolation 103.

Cette poutre comporte à chacune de ses extrémités un doigt de positionnement 209 s'étendant selon l'axe de ladite poutre et destiné à s'engager dans la gouttière 103' de la cloison d'isolation 103, de sorte que la poutre 208 se substitue localement à la partie supérieure de la cloison d'isolation 103.

Ici, cette poutre 208 vient de formation par moulage avec la boîte d'isolation électrique, mais, avantageusement, elle pourrait être rapportée sur la boîte d'isolation positionnée dans le premier compartiment 120 du conduit de câblage 100, de manière à permettre, avant la mise en place de ladite poutre, d'accéder facilement à l'espace défini à l'intérieur de la boîte pour raccorder les câbles d'alimentation circulant dans le deuxième compartiment 110 à l'appareillage électrique situé dans la boîte d'isolation électrique, et éviter un tricotage des câbles d'alimentation électriques.

La poutre 208 solidaire des montants latéraux du cadre de la boîte d'isolation électrique assure une continuité de la cloison d'isolation 103 au-dessus de l'ouverture d'accès latéral 204 substituée à l'ouverture de communication 104 et dans laquelle sont passés les câbles d'alimentation à raccorder à l'appareillage électrique correspondant monté dans la boîte d'isolation électrique.

Enfin, le cadre 205 comporte une partie inférieure longitudinale 212 parallèle à la poutre 208 et comportant sur sa face inférieure une rainure 213 dans laquelle est destinée à s'engager dans la tranche longitudinale inférieure 104" de l'ouverture de communication 104 lors de la mise en place de la boîte d'isolation électrique 200 dans le compartiment 120. Cela participe également au bon positionnement de l'ouverture d'accès latéral 204 vis-à-vis de l'ouverture de communication 104 de la paroi d'isolation et permet d'assurer une isolation "étanche" à ce niveau entre l'intérieur de la boîte d'isolation 200 et l'intérieur dudit compartiment 120.

Enfin, le bord supérieur de la paroi latérale 203' de la boîte d'isolation électrique comporte une partie en renfoncement venant se positionner sous la gouttière 102' de la paroi latérale externe 102 du conduit de câblage 100, de sorte que cette boîte d'isolation assure une parfaite "étanchéité" électrique entre son espace interne et l'espace intérieur du premier compartiment 120 dans lequel elle est montée.

## Revendications

1. Conduit de câblage électrique (100) comprenant au moins un premier (120) et un deuxième (110) compartiments de cheminement de câbles s'étendant en parallèle selon la direction générale longitudinale dudit conduit, et séparés l'un de l'autre par une cloison d'isolation fixe (103), qui comprend au moins une ouverture de communication (104) entre les premier et deuxième compartiments (120, 110), **caractérisé en ce qu'**il comprend une boîte d'isolation électrique (200) comportant une paroi latérale (203) pourvue d'une ouverture d'accès latéral (204), ladite boîte d'isolation électrique (200) étant montée dans le premier compartiment (120) de manière à ce que son ouverture d'accès latéral (204) coïncide avec ladite ouverture de communication (104), l'espace défini à l'intérieur de ladite boîte (200) formant une extension du deuxième compartiment (110) dans le premier (120), qui est isolée électriquement du premier compartiment (120) et destinée à accueillir un appareillage électrique (1) à raccorder à des câbles électriques circulant dans le deuxième compartiment (110).

2. Conduit de câblage (100) selon la revendication 1, **caractérisé en ce que** chaque ouverture de communication (104) est réalisée à la demande par découpage de ladite cloison d'isolation (103).

3. Conduit de câblage (100) selon la revendication 1, **caractérisé en ce que** chaque ouverture de communication (104) vient de formation avec ladite cloison d'isolation (103).

4. Conduit de câblage (100) selon l'une des revendications 1 à 3, **caractérisé en ce que** la boîte d'isolation électrique (200) comporte outre son ouverture d'accès latéral (204), une ouverture d'accès frontal (202) recevant une platine support (300) d'un appareillage électrique (1).

5. Conduit de câblage (100) selon l'une des revendication 1 à 4, **caractérisé en ce que** la boîte d'isolation électrique (200) comporte sur sa paroi latérale (203) pourvue de l'ouverture d'accès latéral (204) des moyens de clipsage (210) de ladite boîte (200) sur ladite cloison d'isolation (103).

6. Conduit de câblage (100) selon l'une des revendications 1 à 5, **caractérisé en ce que** la platine support (300) d'appareillage électrique est clipsée sur le conduit de câblage (100) de manière à maintenir en position la boîte d'isolation électrique (200) dans le compartiment (120) correspondant dudit conduit (100).

7. Conduit de câblage (100) selon l'une des revendications 1 à 6, **caractérisé en ce que** l'ouverture d'accès latéral (204) de la boîte d'isolation électrique (200) est définie à l'intérieur d'un cadre (205) en saillie de la paroi latérale (203) correspondante de ladite boîte d'isolation électrique (200).

8. Conduit de câblage (100) selon la revendication 7, **caractérisé en ce que** ledit cadre (205) comporte deux montants latéraux parallèles (206) formant des retours en équerre de ladite paroi latérale (203) de ladite boîte d'isolation, et portant sur leur face externe des moyens de positionnement (207) dudit cadre (205) dans l'ouverture de communication (104) de ladite cloison d'isolation (103) de sorte que ladite ouverture d'accès latéral (204) de la boîte d'isolation électrique (200) coïncide avec ladite ouverture de communication (104).

9. Conduit de câblage (100) selon l'une des revendications 7 ou 8, **caractérisé en ce que** ledit cadre (205) comprend une poutre longitudinale (208) délimitant à la fois un côté de l'ouverture d'accès latéral (204) et un côté de l'ouverture d'accès frontal (202), ladite poutre (208) portant à ses extrémité un doigt de positionnement (209) du cadre (205) dans l'ouverture de communication (104) destiné à s'engager dans une gouttière appropriée (103') de la cloison d'isolation (103), de sorte que la poutre (208) se substitue localement à la partie haute de la cloison d'isolation (103).

10. Conduit de câblage (100) selon la revendication 9, **caractérisé en ce que** la poutre (208) vient de formation avec la boîte d'isolation électrique (200).

11. Conduit de câblage (100) selon la revendication 9, **caractérisé en ce que** la poutre (208) est rapportée sur la boîte d'isolation électrique (200).

12. Conduit de câblage (100) selon l'une des revendications 1 à 11, **caractérisé en ce que** la boîte d'isolation électrique (200) comporte sur la face externe de sa paroi de fond (201) des moyens de clipsage (211) sur un rail longitudinal prévu dans le fond du compartiment correspondant du conduit de câblage.

## Claims

1. Electrical wiring trunking (100) including at least first (120) and second (110) cable running compartments extending parallel to each other in a general lengthwise direction of said trunking and separated from each other by a fixed insulative partition (103) which includes at least one communication opening (104) between said first and second compartments (120, 110), **characterized in that** it comprises an electrical insulation box (200) having a lateral wall (203) with a lateral access opening (204) mounted in said first compartment (120) so that its lateral access opening (204) coincides with said communication opening (104) and the space inside said box (200) forms an extension of said second compartment (110) into said first compartment (120) which is electrically insulated from said first compartment (120) and adapted to receive an electrical accessory (1) to be connected to electrical cables running in said second compartment (110).

2. The wiring trunking (100) according to claim 1 wherein each communication opening (104) is made as and when required by cutting said insulative partition (103).

3. The wiring trunking (100) according to claim 1 wherein each communication opening (104) is formed integrally with said insulative partition (103).

4. The wiring trunking (100) according to any one of claims 1 to 3, wherein said electrical insulation box (200) also has, in addition to its lateral access opening (204), a front access opening (202) receiving an electrical accessory support plate (300).

5. The wiring trunking (100) according to any one of claims 1 to 4 wherein said electrical insulation box (200) has on its lateral wall (103) incorporating said lateral access opening (204) means (210) for clipping said box (200) to said insulative partition (103).

6. The wiring trunking (100) according to any one of claims 1 to 5 wherein said electrical accessory support plate (300) is clipped to said wiring trunking (100) in such a manner as to hold said electrical insulation box (200) in position in the corresponding compartment (120) of said trunking (100).

7. The wiring trunking (100) according to any one of claims 1 to 6 wherein said lateral access opening (204) of said electrical insulation box (200) is defined within a frame (205) projecting from the corresponding lateral wall (203) of said electrical insulation box (200).

8. The wiring trunking (100) according to claim 7 wherein said frame (205) has two parallel lateral uprights (206) forming right-angle rims on said lateral wall (203) of said insulation box and carrying on their outside face means (207) for locating said frame (205) in said communication opening (104) of said insulative partition (103) so that said lateral access opening (204) of said electrical insulation box (200) coincides with said communication opening (104).

9. The wiring trunking (100) according to claim 7 or claim 8 wherein said frame (205) includes a longitudinal beam (208) delimiting both one side of said lateral access opening (204) and one side of said front access opening (202) and carrying at its ends a finger (209) for locating said frame (205) in said communication opening (104) adapted to engage in an appropriate channel (103') on said insulative partition (103) so that said beam (208) is locally substituted for an upper part of said insulative partition (200).

10. The wiring trunking (100) according to claim 9 wherein said beam (208) is formed integrally with said electrical insulation box (200).

11. The wiring trunking (100) according to claim 9 wherein said beam (208) is attached to said electrical insulation box (200).

12. The wiring trunking (100) according to any one of claims 1 to 11 wherein said electrical insulation box (200) has on the outside face of its back wall (201) means (211) for clipping it to a longitudinal rail provided on the back of the corresponding compartment of said wiring trunking.

## Patentansprüche

1. Installationskanal (100) mit wenigstens einer ersten (120) und einer zweiten (110) Kammer zum Führen von Kabeln, die in allgemeiner Längsrichtung des Kanals parallel verlaufen und durch eine ortsfeste Isoliertrennwand (103), die wenigstens eine Verbindungsöffnung (104) zwischen der ersten und der zweiten Kammer (120, 110) aufweist, voneinander getrennt sind,
**dadurch gekennzeichnet, dass** er eine Isolierdose (200) mit einer Seitenwand (203) umfasst, die mit einer seitlichen Zugangsöffnung (204) versehen ist, wobei die Isolierdose (200) in der ersten Kammer (120) so angebracht ist, dass ihre seitliche Zugangsöffnung (204) mit der Verbindungsöffnung (104) zusammentrifft, wobei der innen in der Dose (200) definierte Raum eine Verlängerung der zweiten Kammer (110) in die erste Kammer (120) bildet, die gegenüber der ersten Kammer (120) elektrisch isoliert ist und zur Aufnahme eines Installationsgerätes (1) bestimmt ist, das an die in der zweiten Kammer (110) verlaufenden elektrischen Kabel angeschlossen werden soll.

2. Installationskanal (100) nach Anspruch 1,
**dadurch gekennzeichnet, dass** jede Verbindungsöffnung (104) bei Bedarf durch Ausschneiden der Isoliertrennwand (103) ausgeführt wird.

3. Installationskanal (100) nach Anspruch 1,
**dadurch gekennzeichnet, dass** jede Verbindungsöffnung (104) an die Isoliertrennwand (103) angeformt ist.

4. Installationskanal (100) nach einem der Ansprüche 1 bis 3,
**dadurch gekennzeichnet, dass** die Isolierdose (200) außer ihrer seitlichen Zugangsöffnung (204) auch eine stirnseitige Zugangsöffnung (202) aufweist, die eine Trägerplatte (300) eines Installationsgerätes (1) aufnimmt.

5. Installationskanal (100) nach einem der Ansprüche 1 bis 4,
**dadurch gekennzeichnet, dass** die Isollerdose (200) an ihrer mit der seitlichen Zugangsöffnung (204) versehenen Seitenwand (203) Mittel (210) zum Festklipsen der Dose (200) an der Isoliertrennwand (103) aufweist.

6. Installationskanal (100) nach einem der Ansprüche 1 bis 5,
**dadurch gekennzeichnet, dass** die Trägerplatte (300) des Installationsgerätes am Installationskanal (100) so festgeklipst ist, dass die Isolierdose (200) in der jeweiligen Kammer (120) des Kanals (100) an Ort und Stelle gehalten wird.

7. Installationskanal (100) nach einem der Ansprüche 1 bis 6,
**dadurch gekennzeichnet, dass** die seitliche Zugangsöffnung (204) der Isolierdose (200) innen von einem Rahmen (205) definiert wird, der aus der jeweiligen Seitenwand (203) der Isolierdose (200) vorsteht.

8. Installationskanal (100) nach Anspruch 7,
**dadurch gekennzeichnet, dass** der Rahmen (205) zwei parallele Seitenstreben (206) aufweist, die rechtwinklige Rücksprünge der Seitenwand (203) der Isolierdose bilden und an ihrer Außenseite Mittel (207) zum Positionieren des Rahmens (205) in der Verbindungsöffnung (104) der Isoliertrennwand (103) tragen, so dass die seitliche Zugangsöffnung (204) der Isolierdose (200) mit der Verbindungsöffnung (104) zusammentrifft.

9. Installationskanal (100) nach einem der Ansprüche 7 oder 8,
**dadurch gekennzeichnet, dass** der Rahmen (205) einen Längsbalken (208) umfasst, der sowohl eine Seite der seitlich Zugangsöffnung (204) als auch eine Seite der stirnseitigen Zugangsöffnung (202) abgrenzt, wobei der Balken (208) an seinen Enden einen Finger (209) zum Positionieren des Rahmens (205) in der Verbindungsöffnung (104) trägt, der dazu bestimmt ist, in eine geeignete Nut (103') der Isoliertrennwand (103) eingeführt zu werden, so dass der Balken (208) stellenweise den oberen Teil der Isoliertrennwand (103) ersetzt.

10. Installationskanal (100) nach Anspruch 9,
**dadurch gekennzeichnet, dass** der Balken (208) an die Isolierdose (200) angeformt ist.

11. Installationskanal (100) nach Anspruch 9,
**dadurch gekennzeichnet, dass** der Balken (208) auf die Isolierdose (200) aufgesetzt ist.

12. Installationskanal (100) nach einem der Ansprüche 1 bis 11,
**dadurch gekennzeichnet, dass** die Isolierdose (200) an der Außenseite ihrer Bodenwand (201) Mittel (211) zum Festklipsen an einer Längsschiene aufweist, die im Boden der jeweiligen Kammer des Installationskanals vorgesehen ist.
